(19) Europäisches Patentamt

European Patent Office

Office européen des brevets

(11) **EP 0 717 387 B1**

(12) **EUROPÄISCHE PATENTSCHRIFT**

(45) Veröffentlichungstag und Bekanntmachung des Hinweises auf die Patenterteilung:
**15.03.2000 Patentblatt 2000/11**

(51) Int Cl.⁷: **G08G 1/056**, G01V 1/00

(21) Anmeldenummer: **95119012.3**

(22) Anmeldetag: **02.12.1995**

(54) **Verfahren und Vorrichtung zum Erkennen der Fahrtrichtung von Fahrzeugen**

Method and device for detecting the movement direction of vehicles

Méthode et dispositif de détection de la direction de déplacement de véhicules

(84) Benannte Vertragsstaaten:
**DE FR GB NL**

(30) Priorität: **14.12.1994 DE 4444424**

(43) Veröffentlichungstag der Anmeldung:
**19.06.1996 Patentblatt 1996/25**

(73) Patentinhaber: **STN ATLAS Elektronik GmbH 28309 Bremen (DE)**

(72) Erfinder:
- **Becker, Gunnar Dipl.-Geophys. D-28199 Bremen (DE)**
- **Hansen, Karl-Emil D-27283 Verden (DE)**
- **Klemp, Jürgen D-28832 Achim (DE)**
- **Tummoscheit, Günter, Dipl.-Ing. D-28876 Oyten (DE)**

(56) Entgegenhaltungen:
DE-A- 3 204 874          GB-A- 2 235 771

**Beschreibung**

Die Erfindung betrifft ein Verfahren und eine Vorrichtung zum Erkennen der Fahrtrichtung von auf einem vorgegebenen Fahrweg fahrenden Fahrzeugen, insbesondere Kettenfahrzeugen, der im Oberbegriff des Anspruchs 1 bzw. des Anspruchs 5 definierten Gattung.

Bodensensoren werden insbesondere bei militärischer Anwendung zur Überwachung von Fahrzeugbewegungen aller Art eingesetzt. Dabei genügt es, den Fahrzeugverkehr auf ausgewählten, signifikanten Fahrwegabschnitten zu kontrollieren, um daraus die Fahrzeugbewegung insgesamt zu erfassen.

So werden bei einem bereits vorgeschlagenen Verfahren zur Detektion und Klassifikation von Fahrzeugen mittels Bodensensoren mittels eines an einem Fahrweg ausgebrachten Bodensensors, der zwei Geophone mit zueinander rechtwinklig ausgerichteten Empfangsrichtungen aufweist, von denen die eine Empfangsrichtung vertikal verläuft, die auf dem Fahrweg fahrenden Fahrzeuge detektiert und nach Rad- und Kettenfahrzeugen klassifiziert. Zur Verbesserung der Klassifikationsgenauigkeit wird mittels zweier bezüglich ihrer Empfangsrichtungen rechtwinklig zueinander ausgerichteter Geophone, von denen eines eine vertikale Empfangsrichtung hat, die bevorzugte Ausbreitungsart der seismischen Wellen am Meßort ermittelt und die Detektionsschwelle entsprechend adaptiert, je nachdem ob Longitudinalwellen (P-Wellen) oder Oberflächenwellen (Rayleigh-Wellen) als dominierende Schallausbreitungswellen festgestellt werden.

Bei einer solchen Überwachung von Fahrwegen ist es auch von Interesse, die Fahrtrichtung der Fahrzeuge festzustellen. Dies wird gemäß einem bereits vorgeschlagenen Verfahren (DE 42 43 802 A1) dadurch erreicht, daß zwei Magnetiksensoren am gleichen Meßort in rechtwinkliger Ausrichtung zueinander am Fahrweg in einer horizontalen Ebene angeordnet werden und die Phasenverschiebung zwischen den Ausgangssignalen der beiden Magnetiksensoren vorzeichenmäßig bestimmt wird. Bei einer positiven Phasenverschiebung wird die eine Wegrichtung und bei einer negativen Phasenverschiebung die andere Wegrichtung als Fahrtrichtung des Fahrzeugs ausgegeben. Ein solches Verfahren erfordert aber die zusätzliche Ausbringung von Magnetiksensoren im Überwachungsbereich, was zusätzliche Kosten verursacht.

Bei einem Verfahren zur Gewinnung von Zieldaten von auf vorgegebenen Bahnen sich bewegenden Fahrzeugen (DE 32 04 874 A1) werden mindestens zwei Geophone mit Dipolcharakteristik in einem in Bahnnähe liegenden Meßort ausgebracht, wobei die Empfangscharakteristiken der Geophone rechtwinklig zueinander ausgerichtet werden und eine der Empfangsrichtungen in die Vertikale weist. Jedes Geophon empfängt eine von zwei sich mit unterschiedlichen Schallgeschwindikeiten ausbreitenden Schallwellen. Zur Ermittlung der Zieldaten werden die Frequenzen der empfangenen Signale und der zeitliche Unterschied des Signalempfangs bestimmt. Anhand dieser Zieldaten wird das Fahrzeug detektiert und klassifiziert.

Bei einem ebenfalls bekannten Verfahren zur Detektion von Fahrzeugen (GB 2 235 771 A) werden zwei Geophone verwendet, die am Meßort im Anstand voneinander angeordnet werden. Ein in Meßortnähe fahrendes Fahrzeug wird durch Vergleich der Spitzenamplitude mindestens eines der zwei Geophonausgangssignale mit einem Schwellwert und dessen Überschreiten detektiert. Um die Falschalarmrate zu reduzieren, wird in einem parallelen Signalverarbeitungskanal die Phasendifferenz zwischen den Geophonausgangssignalen gemessen. Nur wenn die Phasendifferenz ihr Vorzeichen ändert, wird das Überschreiten des Schwellwerts durch die Spitzenampltude eines der Geophonausgangssignale als Detektion eines Fahrzeugs zugelassen.

Der Erfindung liegt die Aufgabe zugrunde, ein Verfahren und eine Vorrichtung der eingangs genannten Art so zu verbessern, daß der Meßelementeinsatz und Hardwareaufwand verbilligt und verringert wird und, insbesondere beim Einsatz in Verbindung mit Bodensensoren zur Fahrzeugdetektion, auf ein Minimum reduziert werden kann.

Die Aufgabe ist erfindungsgemäß durch die Merkmale des Anspruchs 1 bzw. des Anspruchs 5 gelöst.

Das erfindungsgemäße Verfahren stützt sich auf den Einsatz von Geophonen, die einerseits wesentlich billiger als Magnetiksensoren sind und andererseits bei Bodensensoren, die zum Zwecke der Gefechtsfeldaufklärung, z. B. zur Detektion von Kettenfahrzeugen, eingesetzt werden, grundsätzlich vorhanden sind und daher nicht erneut installiert werden müssen. Mindestens eines dieser Geophone der Bodensensoren kann für die Durchführung des erfindungsgemäßen Verfahrens verwendet werden, so daß in diesem Fall wenigstens ein Geophon eingespart wird.

Das erfindungsgemäße Verfahren macht sich dabei die Tatsache zunutze, daß von allen seismischen Wellenarten, die sich im Boden durch Einkopplung von Fahrzeugschall ausbreiten, die sog. Oberflächen- oder Rayleigh-Welle den dominierenden Wellentyp darstellt. Dieser Wellentyp ist retrograd elliptisch polarisiert, d. h., die Bewegungsrichtung der Partikel an der Erdoberfläche, die sich beim Durchgang einer Rayleigh-Welle auf einer Ellipse bewegen, ist der Ausbreitungsrichtung der Rayleigh-Welle entgegengesetzt. Mit dem erfindungsgemäßen Verfahren werden nunmehr die Rayleigh-Wellenanteile der von den Geophonen aufgenommenen seismischen Wellen detektiert und deren Polarisation bestimmt, d. h. festgestellt, in welcher Drehrichtung die Partikel auf ihrer Ellipsenbahn schwingen. Durch die feste Zuordnung der Polarisation, also der Partikeldrehrichtung, zur Ausbreitungsrichtung der Rayleigh-Welle ist anhand der festgestellten Polarisation die Ausbreitungsrichtung der Rayleigh-Welle und damit die Fahrtrichtung des Fahrzeugs bestimmbar. Das erfindungsgemäße Verfahren arbeitet besonders vorteilhaft bei Kettenfahrzeugen, liefert aber auch brauchbare Ergebnisse bei Radfahrzeugen mit grobstolligen Reifenlaufflächen.

Vorteilhafte Ausführungsformen des erfindungsgemäßen Verfahrens bzw. der erfindungsgemäßen Vorrichtung mit zweckmäßigen Ausgestaltungen und Verbesserungen der Erfindung ergeben sich aus den weiteren Ansprüchen.

In einer besonderen Ausgestaltung des erfindungsgemäßen Verfahrens wird zur Feststellung des Rayleigh-Wellenanteils der Phasenwinkel φ der seismischen Schwingungen am Meßort durch Berechnung des arctan des Quotienten aus dem Geophon-Ausgangssignal des Geophons mit horizontaler und dem Geophon-Ausgangssignal des Geophons mit vertikaler Empfangsrichtung ermittelt und dessen Änderung über ein Zeitintervall festgestellt. Der Betrag dieser Phasenwinkeländerung wird mit einer Schwelle, die signifikant größer als "Null" ist, verglichen. Rayleigh-Wellenanteile sind in der seismischen Schwingung vorhanden, wenn dieser Betrag die Schwelle übersteigt. Zur Ermittlung der Polarisation der Rayleigh-Wellenanteile wird das Vorzeichen der Phasenwinkeländerung bestimmt, wobei jeweils ein Vorzeichen der Phasenwinkeländerung einer Fahrtrichtungsangabe zugeordnet ist. Die Fahrtrichtung des Fahrzeugs wird dabei von links nach rechts bei positivem Vorzeichen und von rechts nach links bei negativem Vorzeichen, jeweils bezogen auf den Meßort, ausgegeben.

In einer einfachen Ausführungsform des erfindungsgemäßen Verfahrens erkennt man die Polarisationsrichtung der über den Meßort hinweg sich ausbreitenden Rayleigh-Wellen dadurch, daß man mittels der beiden rechtwinklig zueinander ausgerichteten Geophone die Signalkomponete der Rayleigh-Welle in Ausbreitungsrichtung längs der Bodenoberfläche und die Signalkomponente der Rayleigh-Welle quer dazu in Vertikalrichtung erfaßt. Diese beiden Signalkomponenten sind je nach Ausbreitungsrichtung um einen festen Phasenwinkel zueinander verschoben. Ist die horizontale Signalkomponente gegenüber der vertikalen Signalkomponente um 90° verschoben, so ist je nach Festlegung die Polarisationsrichtung linksdrehend (entgegen Uhrzeigersinn), ist sie um 270° (-90°) verschoben, so ist die Polarisationsrichtung rechtsdrehend (im Uhrzeigersinn) oder umgekehrt. Da die Polarisation , d. h. die Drehrichtung der angeregten Partikel, immer entgegengesetzt zur Ausbreitungsrichtung der Rayleigh-Welle ist, läßt sich deren Ausbreitungsrichtung und damit die Richtung der Fahrzeugbewegung bestimmen. Man muß also nur die Phasenverschiebung zwischen den Ausgangssignalen der beiden zueinander rechtwinklig ausgerichteten Geophone bestimmen, um die Polarisation der Rayleigh-Welle festzustellen. Gleichzeitig ist diese Phasenverschiebung auch ein Anzeichen dafür, daß tatsächlich Rayleigh-Wellen erfaßt werden, denn eine von den beiden Geophonen empfangene Longitudinalwelle (P-Welle) würde eine feste Phasenverschiebung von 0° bzw. 180° zur Folge haben. Die Phasenverschiebung zwischen den Geophon-Ausgangssgnalen läßt sich mittels geeigneter, an sich bekannter Verfahren, z. B. eines Korrelationsverfahrens, ermitteln und die Fahrtrichtung entsprechend der Phasenverschiebung ausgegeben. Diese Verfahrensvereinfachung wird insbesondere dann eingesetzt, wenn aus anderen Gründen bereits eine Rayleigh-Wellen-Detektion erforderlich ist. In diesem Fall bedarf es für den Einsatz des erfindungsgemäßen Verfahrens keiner weiteren Hardwarekomponenten.

Eine vorteilhafte Vorrichtung zur Durchführung des erfindungsgemäßen Verfahrens ist in Anspruch 5 angegeben.

Die Erfindung ist anhand von in der Zeichnung dargestellten Ausführungsbeispielen einer Vorrichtung zum Erkennen der Fahrtrichtung von auf einem vorgegebenen Fahrweg fahrenden Fahrzeugen im folgenden näher beschrieben. Es zeigen:

Fig. 1 ein Blockschaltbild einer Vorrichtung zur Fahrtrichtungsdetektion,

Fig. 2 eine schematische Darstellung der Schwingungsform einer Rayleigh-Welle,

Fig. 3 ein Blockschaltbild einer Vorrichtung zur Fahrtrichtungsdetektion gemäß einem weiteren Ausführungsbeispiel.

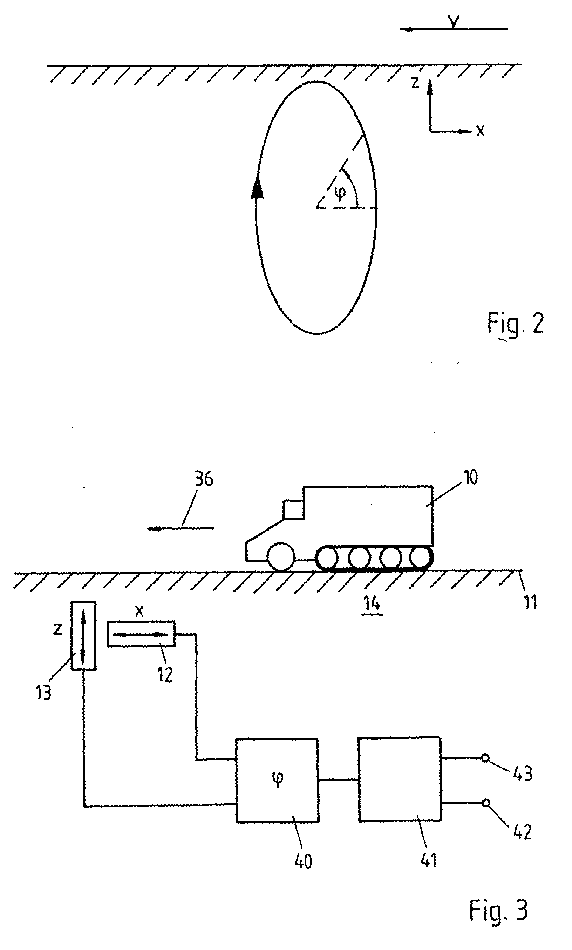

Mit dem nachfolgend beschriebenen Verfahren wird die Fahrtrichtung von Fahrzeugen 10 detektiert, die auf einem vorgegebenen Fahrweg, z. B. einer Straße 11, fahren. Hierzu werden dicht an der Straße 11 zwei Geophone 12 und 13 am gleichen Meßort in rechtwinkliger Ausrichtung zueinander angeordnet, wobei die Empfangsrichtung des einen Geophons 13 vertikal ausgerichtet ist und die Empfangsrichtung des anderen Geophons 12 in der Horizontalebene im wesentlichen parallel zum Straßenverlauf weist. Die Geophone 12 und 13 erfassen in bekannter Weise seismische Wellen, die sich im Erdboden unterhalb der Straße 11 ausbreiten. Diese seismischen Wellen werden bei Kettenfahrzeugen im wesentlichen durch das Abrollen der Laufräder über die Kettenglieder der Antriebskette angeregt. Diese seismischen Wellen breiten sich in unterschiedlichen Wellentypen aus, wobei die wesentlichen Wellentypen die Longitudinal- oder P-Welle und die Oberflächen- oder Rayleigh-Welle sind. Je nach Bodenbeschaffenheit kann eine der Wellenarten dominieren, was in der Regel für die energiereichere Rayleigh-Welle zutrifft. Wie in Fig. 2 schematisch dargestellt ist, ist die Rayleigh-Welle retrograd elliptisch polarisiert, d. h. die beim Durchgang der Rayleigh-Welle an der Erdoberfläche angeregten Partikel führen eine Schwingbewegung auf einer Ellipsenbahn aus, wobei die Ellipsenbahn in einem Drehsinn durchlaufen wird, der der Ausbreitungsrichtung v der Rayleigh-Welle entgegengerichtet ist. Als Folge dieser Rayleigh-Wellen treten an den Geophonen 12 und 13 Ausgangssignale auf, deren Frequenz im wesentlichen der Kettengliedfrequenz entspricht, d.h. der Frequenz, mit welcher die Kettenglieder auf die Straße aufschlagen, und die zueinander in einer festen Phasenbeziehung bestehen, nämlich gegeneinander um ±90° phasenverschoben sind.

Verfahrensgemäß wird nunmehr aus den Geophon-Ausgangssignalen ein Rayleigh-Wellenanteil der von den Geophonen 12, 13 erfaßten seismischen Wellen festgestellt und dessen Polarisation, d. h. der Drehsinn der Partikelschwingung gemäß Fig. 2, ermittelt. Der Drehsinn ist bei dem bereits erwähnten festen Zusammenhang zur Ausbreitungsrichtung der Rayleigh-Welle ein unmittelbares Maß für die Fahrtrichtung des die Rayleigh-Welle anregenden Fahrzeugs.

Im einzelnen wird zur Festellung des Rayleigh-Wellenanteils der Phasenwinkel φ (Fig. 2) der seismischen Schwingung gemäß

$$\varphi(t) = \arctan \frac{z(t)}{x(t)} \qquad (1)$$

bestimmt, wobei x(t) das Ausgangssignal des Geophons 12 und z(t) das Ausgangssignal des Geophons 13 sowie φ(t) der Ortsvektor des schwingenden Partikels ist. Die Drehrichtung des Partikels entgegen Uhrzeigersinn bedeutet positiven Phasenwinkel. Über ein Zeitintervall τ wird die Änderung des Phasenwinkels φ festgestellt und der Betrag der Phasenwinkeländerung mit einer Schwelle größer "Null" verglichen. Zur Ermittlung der Polarisation wird das Vorzeichen der Phasenwinkeländerung bestimmt und die Fahrtrichtung des Fahrzeugs 10 bei positivem Vorzeichen der Phasenwinkeländerung von links nach rechts und bei negativen Vorzeichen von rechts nach links, jeweils bezogen auf den Meßort ausgegeben.

Zusätzlich wird aus den Geophonausgangssignalen noch der Betrag der Schwinggeschwindigkeit der seismischen Schwingung der Partikel (Fig. 2) gemäß

$$|a(t)| = \sqrt{[z(t)]^2 + [x(t)]^2} \qquad (2)$$

bestimmt, wozu die quadrierten Geophonausgangssignale addiert und radiziert werden. Der erhaltene Betrag wird mit einer Schwelle größer "Null" verglichen und nur bei Schwellenüberschreitung eine Fahrtrichtungsausgabe zugelassen. Durch diese zusätzlichen Verfahrensschritte können durch geeignete Wahl der Schwelle Störungen unterdrückt werden, aber auch der Zeitpunkt der dichtesten Annäherung des Fahrzeugs 10 an den Meßort (closest point of approache CPA) annähernd bestimmt werden.

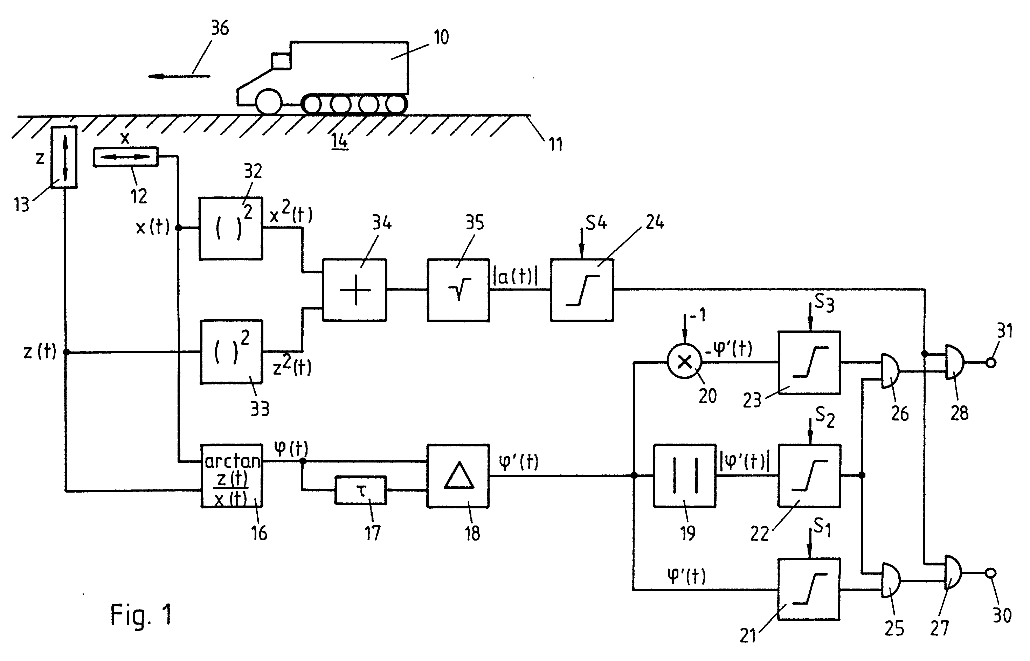

In Fig. 1 ist ein Blockschaltbild einer Vorrichtung dargestellt, mit welcher das vorstehend beschriebene Verfahren durchgeführt werden kann. Im einzelnen umfaßt die Vorrichtung eine Recheneinheit 16, ein Differenzierglied, bestehend aus einem Verzögerungsglied 17 und einem Differenzbildner 18, einen Betragsbildner 19, einen Inverter 20, drei Schwellenkomparatoren oder Diskriminatoren 21, 22 und 23 mit jeweils einem Schwellwert $S_1$, $S_2$, $S_3$, der signifikant größer ist als "Null", und vier UND-Glieder 25 bis 28. Die Recheneinheit 16 ist eingangsseitig an die beiden Ausgänge der Geophone 12 und 13 angeschlossen und berechnet aus den Geophonausgangssignalen z(t) und x(t) zunächst deren Quotienten und dann unter Berücksichtigung der Phasenlage der Geophonausgangssignale z(t) und x(t) den arctan des Quotienten gemäß Gl. (1). Der Ausgang der Recheneinheit 16 ist einmal direkt mit dem einen Eingang und einmal über das Verzögerungsglied 17 mit dem anderen der beiden Eingänge des Differenzbildners 18 verbunden. Die im Verzögerungsglied 17 eingestellte Verzögerungszeit τ beträgt typischerweise etwa 5 msec. Der Ausgang des Differenzbildners 18 ist einmal direkt mit dem ersten Diskriminator 21, einmal über den Betragsbildner 19 mit dem zweiter Diskriminator 22 und einmal über den Inverter 20 mit dem dritten Diskriminator 23 verbunden. Die Ausgänge des ersten und zweiten Diskriminators 21 und 22 sind an die Eingänge des ersten UND-Gliedes 25 und die Ausgänge des zweiten und dritten Diskriminators 22 und 23 an die Ausgänge des zweiten UND-Gliedes 26 angeschlossen. Die Ausgänge des ersten und zweiten UND-Gliedes 25, 26 sind jeweils über das dritte und vierte UND-Glied 27, 28 mit einem Fahrtrichtungsanzeige-Ausgang 30 bzw. 31 verbunden. Vorteilhafterweise werden in dem Differenzbildner 18 noch zusätzlich die berechneten Werte der Phasenwinkeländerungen φ'(t) gemittelt, wozu ein dem Ausgang des Diferenzbildners 18 vorgeschalteter Glättungsrechner vorgesehen wird. Am Ausgang des Differenzbildners 18 stehen dann die Mittelwerte der Phasenwinkeländerungen zur weiteren Verarbeitung an.

Weiterhin sind die Ausgänge der Geophone 12 und 13 jeweils mit einem Quadrierer 32 bzw. 33 verbunden. Die Ausgänge der Quadrierer 32, 33 sind an einem Addierer 34 angeschlossen, dem ein Radizierer 35 und diesem ein vierter Schwellwertkomparator oder Diskriminator 24 nachgeschaltet ist. Der Ausgang des vierten Diskriminators 24 ist jeweils mit dem zweiten Eingang des dritten und vierten UND-Gliedes 27 und 28 verbunden. Die Schwelle $S_4$ des vierten Diskriminators 24 ist auf einen Wert eingestellt, der signifikant größer ist als "Null". An den Fahrtrichtungsanzeige-Ausgängen 30, 31 der Vorrichtung tritt damit nur dann ein Fahrtrichtungssignal auf, wenn der Betrag der Schwinggeschwindigkeit |a(t)| signifikant größer ist als "Null", d. h. vom vierten Diskriminator 24 ein Signal größer "Null" an das dritte und vierte UND-Glied 27, 28 gelangt, und der Betrag der Winkeländerung |φ'(t)| signifikant größer ist als "Null", d. h. der zweite Diskriminator 22 an das erste und zweite UND-Glied 25, 26 ein Signal größer "Null" legt, sowie entweder die Phasenwinkeländerung φ' signifikant größer oder kleiner als "Null" ist, d. h. der erste Diskriminator 21 ein Signal größer "Null" an das erste UND-Glied 25 oder der dritte Diskriminator 23 ein Signal größer "Null" an das zweite UND-Glied 26 legt. Der Fahrtrichtungsanzeige-Ausgang 31 führt dann ein Signal, wenn sich das Fahrzeug 10 bezogen auf den Meßort von rechts nach links gemäß Pfeil 36 in Fig. 1 bewegt, und der Fahrtrichtungsanzeige-Ausgang 30 führt dann Signal, wenn das Fahrzeug sich in Gegenrichtung dem Meßort nähert.

Anzumerken wäre noch, daß nach Passieren des Meßortes durch das Fahrzeug 10 sich die Fahrtrichtungsanzeige umkehrt. Fährt das Fahrzeug 10 in Fig. 1 in Pfeilrichtung 36, so wird zunächst die an den Fahrtrichtungsanzeige-Ausgang 31 angeschlossene Anzeigevorrichtung aktiviert und eine Fahrtrichtung von rechts nach links ausgegeben. Hat das Fahrzeug 10 in gleicher Fahrtrichtung 36 den Meßort passiert, so wird nunmehr die an den Fahrtrichtungsanzeige-Ausgang 30 angeschlossene Anzeige aktiviert und würde fälschlicherweise eine Fahrtrichtung in Gegenrichtung signalisieren. Da aber der Zeitpunkt des Passierens des Meßorts durch das Fahrzeug 10 (CPA) aus den Geophonausgangssignalen, wie vorstehend erwähnt, annähernd bestimmt werden kann, läßt sich dieser Effekt des Anzeigewechsels an den Ausgängen 30, 31 der Vorrichtung ohne weiteres eliminieren.

In Fig. 3 ist eine Vorrichtung zur Fahrtrichtungsdetektion dargestellt, die nach einem modifizierten Verfahren arbeitet. Sie stimmt insofern mit der vorstehend beschriebenen Vorrichtung überein, als die beiden Geophone 12, 13 in gleicher Ausrichtung in den Erdboden 14 nahe der Straße 11 eingesenkt sind. Im Prinzip genügt aber auch ein teilweises Einkoppeln der Geophonanordnung in den Erdboden 14. Die beiden Ausgänge der Geophone 12, 13 sind an einen Modul 40 angeschlossen, der die Phasendifferenz zwischen den Geophon-Ausgangssignalen bestimmt. Eine solche Phasendifferenzbestimmung kann beispielsweise mit einem Korrelationsverfahren erfolgen. Dem Modul 14 ist ein Selektierer 41 mit den beiden Fahrtrichtungsanzeige-Ausgängen 42 und 43 nachgeschaltet. Der Selektierer 41 erfaßt einmal eine Phasendifferenz im Bereich 90° und legt dann ein Ausgangssignal an den Fahrtrichtungsanzeige-Ausgang 42 und einmal eine Phasendifferenz im Bereich 270° und legt dann ein Anzeigesignal an den Fahrtrichtungsanzeige-Ausgang 43. Eine an den Ausgang 43 angeschlossene Anzeige signalisiert die Fahrtrichtung rechts nach links, wenn sich das Fahrzeug 10 in Pfeilrichtung 36 in Fig. 3 dem Meßort nähert, eine an den Ausgang 42 angeschlossene Anzeige signalisiert die Fahrtrichtung links nach rechts, wenn sich das Fahrzeug 10 in Gegenrichtung dem Meßort nähert.

Diese modifizierte Vorrichtung zur Fahrtrichtungsbestimmung läßt sich besonders vorteilhaft bei einem Verfahren zur Detektion und Klassifikation von Fahrzeugen einsetzen. Für die Erweiterung dieses Verfahrens um das zusätzliche Merkmal der Fahrtrichtungsdetektion wird kein zusätzlicher Hardwareaufwand benötigt, da auch bei diesem bekannten Verfahren bereits eine Phasenverschiebung zwischen den Ausgangssignalen der beiden in gleicher Weise angeordneten Geophone 12 und 13, die ebenfalls bereits vorhanden sind, ermittelt wird. Gemäß dem erfindungsgemäßen Verfahren wird die Selektion zwischen den Phasenwinkelbereichen 90' und 270° und die entsprechende Fahrtrichtungsanzeige durchgeführt werden.

**Patentansprüche**

1. Verfahren zum Erkennen der Fahrtrichtung von auf einem vorgegebenen Fahrweg fahrenden Fahrzeugen, insbesondere Kettenfahrzeugen, bei welchen zwei Bodensensoren mit zueinander rechtwinklig ausgerichteten Empfangsrichtungen nahe des Fahrwegs in den Boden eingekoppelt werden, dadurch gekennzeichnet, daß als Bodensensoren zwei Geophone (12, 13) verwendet werden, von denen eines mit vertikal ausgerichteter Empfangsrichtung angeordnet wird, daß mittels der Geophon-Ausgangssignale ein Rayleigh-Wellenanteil der von den Geophonen (12, 13) erfaßten seismischen Wellen festgestellt und dessen Polarisation ermittelt wird und daß aus der Polarisation des Rayleigh-Wellenanteils die Fahrtrichtung abgelesen wird.

2. Verfahren nach Anspruch 1, dadurch gekennzeichnet, daß zur Feststellung des Rayleigh-Wellenanteils der Phasenwinkel (φ) der seismischen Schwingung durch Berechnung des arctan des Quotienten aus dem Geophonausgangssignals des Geophons (13) mit vertikaler und dem Geophonausgangssignal des Geophons (12) mit horizontaler Empfangsrichtung ermittelt und dessen Änderung über ein Zeitintervall festgestellt wird, sowie der Betrag der Phasenwinkeländerung ($|\varphi'(t)|$) mit einer Schwelle $S_2$ größer "Null" verglichen wird, daß zur Ermittlung der Polarisation das Vorzeichen der Phasenwinkeländerung ($\varphi'(t)$) bestimmt wird und daß jeweils einem Vorzeichen der Phasenwinkeländerung ($\varphi'(t)$) eine Fahrtrichtungsangabe zugeordnet wird.

3. Verfahren nach Anspruch 2, dadurch gekennzeichnet, daß die Fahrtrichtung des Fahrzeugs bei positivem Vorzeichen der Phasenwinkeländerung ($\varphi'(t)$) von links nach rechts und bei negativem Vorzeichen von rechts nach links, jeweils bezogen auf den Meßort, ausgegeben wird.

4. Verfahren nach einem der Ansprüche 1 bis 3, dadurch gekennzeichnet, daß die quadrierten Geophon-Ausgangssignale addiert und radiziert werden und der erhaltene Betrag mit einer Schwelle ($S_4$) größer "Null" verglichen wird und daß nur bei Schwellenüberschreitung eine Fahrtrichtungsangabe zugelassen wird.

5. Vorrichtung zur Durchführung des Verfahrens nach einem der Ansprüche 1 bis 4, dadurch gekennzeichnet, daß die Ausgangssignale von zwei am Fahrweg (11) in den Boden (14) eingesenkten Geophonen (12, 13), deren Empfangsrichtungen bei vertikaler Empfangsrichtung des einen Geophons (13) rechtwinklig zueinander ausgerichtet sind, einer Recheneinheit (16) zur Bestimmung des arctan ihres Quotienten zugeführt sind, daß der Ausgang der Recheneinheit (16) einerseits direkt und andererseits über ein Verzögerungsglied (17) an die beiden Eingänge eines Differenzbildners (18) angeschlossen ist, daß der Ausgang des Differenzbildners (18) jeweils direkt, über einen Betragsbildner (19) und über einen Inverter (20) mit einem ersten, zweiten und dritten Diskriminator (21, 22, 23) verbunden ist, daß die Ausgänge von erstem und zweitem Diskriminator (21, 22) und zweitem und drittem Diskriminator (22, 23) jeweils an ein erstes und ein zweites UND-Glied (25, 26) angeschlossen sind, daß die Ausgänge der UND-Glieder (25, 26) mit jeweils einem Fahrtrichtungsanzeige-Ausgang (30 bzw. 31) verbunden sind und daß die Schwellen ($S_1$, $S_2$, $S_3$) der Diskriminatoren (21, 22, 23) jeweils signifikant größer "Null" eingestellt sind.

6. Vorrichtung nach Anspruch 5, dadurch gekennzeichnet, daß die Verzögerungszeit ($\tau$) des Verzögerungsglieds (17) typischerweise etwa 5 msec beträgt.

7. Vorrichtung nach Anspruch 5 oder 6, dadurch gekennzeichnet, daß dem Ausgang des Differenzbildners (18) ein Glättungsrechner zur Mittelwertbildung vorgeschaltet ist.

8. Vorrichtung nach einem der Ansprüche 5 bis 7, dadurch gekennzeichnet, daß die Geophonausgangssignale zusätzlich über je einem Quadrierer (32, 33) einem Addierer (34) zugeführt sind, dem ein Radizierer (35) nachgeschaltet ist, daß der Ausgang des Radizierers (35) mit einem vierten Diskriminator (24) verbunden ist, dessen Schwelle ($S_4$) signifikant größer als "Null" eingestellt ist, und daß zwischen dem Fahrtrichtungsanzeige-Ausgängen (30, 31) und dem ersten und zweiten UND-Glied (25, 26) jeweils ein weiteres UND-Glied (27 bzw. 28) eingeschaltet ist, dessen zweiter Eingang mit dem Ausgang des vierten Diskriminators (24) verbunden ist.

9. Vorrichtung nach einem der Ansprüche 5 bis 8, dadurch gekennzeichnet, daß die Empfangsrichtung des zweiten Geophons (12) parallel zum Fahrweg (11) ausgerichtet ist.

10. Verfahren nach Anspruch 1, dadurch gekennzeichnet daß zur Feststellung des Rayleigh-Wellenanteils und dessen Polarisation die Phasenverschiebung zwischen den Ausgangssigalen der Geophone (12, 13) bestimmt wird und daß bei einer Phasenverschiebung im Bereich von 90° die eine Fahrtrichtung und im Bereich von 270° die entgegengesetzte Fahrtrichtung ausgegeben wird.

## Claims

1. Method of recognising the direction of travel of vehicles, particularly tracked vehicles, travelling on a predetermined roadway, in which two ground sensors with reception directions oriented at right angles to one another are installed in the ground near the roadway, characterised in that two geophones (12, 13) are used as ground sensors, one of which is disposed with its reception direction oriented vertically, that by means of the geophone output signals a Rayleigh wave component of the seismic waves detected by the geophones (12, 13) is determined and its polarisation is ascertained, and that the direction of travel is read off from the polarisation of the Rayleigh wave component.

2. Method as claimed in Claim 1, characterised in that in order to determine the Rayleigh wave component the phase angle ($\varphi$) of the seismic oscillation is ascertained by calculation of the arctan of the quotient of the geophone output signal of the geophone (13) with a vertical reception direction and the geophone output signal of the geophone (12) with a horizontal reception direction and its change over a time interval is determined, and also the amount of the change of phase angle ($|\varphi'(t)|$) is compared with a threshold $S_2$ greater than "zero", that in order to ascertain the polarisation the sign of the change of phase angle ($\varphi'(t)$) is determined and that in each case a statement of the direction of travel is associated with a sign of the change of phase angle ($\varphi'(t)$).

3. Method as claimed in Claim 2, characterised in that the direction of travel of the vehicle in the case of a positive sign of the change of phase angle ($\varphi'(t)$) is output from left to right and in the case of a negative sign from right to left, in each case relative to the measurement location.

4. Method as claimed in one of Claims 1 to 3, characterised in that the squared geophone output signals are added and the square root extracted and the amount obtained is compared with a threshold ($S_4$) greater than "zero", and that a statement of the direction of travel is only allowed in the event of the threshold being exceeded.

5. Apparatus for carrying out the method as claimed in one of Claims 1 to 4, characterised in that the output signals from two geophones (12, 13) which are recessed into the ground (14) on the roadway (11) and of which the reception directions are oriented at right angles to one another in the case where one geophone (13) has a vertical reception direction are supplied to a computer unit (16) for determination of the arctan of their quotient, that the output of the computer unit (16) is connected on the one hand directly and on the other hand by way of a lag element (17) to the two inputs of a difference former (18), that the output of the difference former (18) is connected in each case directly by way of a sum former (19) and by way of an inverter (20) to a first, second and third discriminator (21, 22, 23), that the outputs of the first and second discriminator (22, 23) are each connected to a first and a second AND gate (25, 26), that the outputs of the AND gates (25, 26) are each connected to one travel direction indication output (30, 31 respectively), and that the thresholds ($S_1$, $S_2$, $S_3$) of the discriminators (21, 22, 23) are each set significantly greater than "zero".

6. Apparatus as claimed in Claim 5, characterised in that the time lag (i) of the lag element (17) amounts typically to approximately 5 msec.

7. Apparatus as claimed in Claim 5 or 6, characterised in that a smoothing computer for mean value formation is connected upstream of the output of the difference former (18).

8. Apparatus as claimed in one of Claims 5 to 7, characterised in that the geophone output signals are additionally supplied in each case by way of a squarer (32, 33) to an adder (34) which has a square root extractor (35) connected downstream of it, that the output of the square root extractor (35) is connected to a fourth discriminator (24), the threshold ($S_4$) of which is significantly greater than "zero", and that between the travel direction indication outputs (30, 31) and the first and second AND gate (25, 26) is interposed in each case a further AND gate (27, 28 respectively), the second output of which is connected to the output of the fourth discriminator (24).

9. Apparatus as claimed in one of Claims 5 to 8, characterised in that the reception direction of the second geophone (12) is oriented parallel to the roadway (11).

10. Method as claimed in Claim 1, characterised in that in order to determine the Rayleigh wave component and its polarisation the phase shift between the output signals of the geophones (12, 13) is determined, and that in the event of a phase shift in the region of 90° one travel direction is output and in the region of 270° the opposite travel direction is output.

## Revendications

1. Procédé pour l'identification du sens de marche de véhicules, notamment de véhicules chenillés, circulant sur un chemin prédéterminé, procédé dans lequel deux capteurs de sol, ayant des directions de réception orientées perpendiculairement l'une à l'autre, sont couplés dans le sol à la proximité du chemin, caractérisé en ce que deux géophones (12, 13) sont utilisés en tant que capteurs de sol, dont un est agencé selon une direction de réception orientée verticalement, en ce qu'au moyen de signaux de sortie des géophones, une partie d'onde de Rayleigh des ondes séismiques enregistrées par les géophones (12, 13) est constatée et la polarisation de cette partie d'onde de Rayleigh est déterminée, et en ce qu'à partir de la polarisation de la partie d'onde de Rayleigh le sens de marche est déterminé.

2. Procédé selon la revendication 1, caractérisé en ce que, pour la détermination de la partie d'onde de Rayleigh, l'angle de phase ($\varphi$) de l'oscillation séismique est déterminé par calcul de l'arctangente du quotient du signal de sortie du géophone (13) ayant une direction de réception verticale et du signal de sortie du géophone (12) ayant une direction de réception horizontale, et sa modification dans un intervalle de temps est constatée, et le montant de la variation de l'angle de phase ($|\varphi'(t)|$) est comparé à un seuil $S_2$ supérieur à « zéro », en ce que pour la détermination de la polarisation, le signe de la variation d'angle de phase ($|\varphi'(t)|$) est déterminé, et en ce qu'à chaque signe de variation d'angle de phase ($|\varphi'(t)|$) une indication de sens de marche est associée.

3. Procédé selon la revendication 2, caractérisé en ce que le sens de marche du véhicule fourni en sortie est de gauche à droite lorsque le signe de variation d'angle de phase ($|\varphi'(t)|$) est positif et de droite à gauche lorsque ce signe est négatif, ceci par rapport à l'endroit de mesure.

4. Procédé selon l'une quelconque des revendications 1 à 3, caractérisé en ce que les signaux de sortie de géophone, élevés au carré, sont additionnés et on en extrait la racine et le montant résultant est comparé à un seuil ($S_4$) supérieur à « zéro », et en ce qu'une indication de sens de marche est permis seulement lors d'un dépassement de seuil.

**5.** Dispositif pour la mise en oeuvre du procédé selon l'une des revendications 1 à 4, caractérisé en ce que les signaux de sortie de deux géophones (12, 13) qui sont enfoncés dans le sol (14) sur le chemin (11) et dont les directions de réception, la direction de réception de l'un des géophones (13) étant verticale, sont orientées perpendiculairement l'une à l'autre, sont envoyés à une unité de calcul (16) pour la détermination de l'arctangente de leur quotient, en ce que la sortie de l'unité de calcul (16) est reliée, d'une part, directement et, d'autre part, par l'intermédiaire d'un élément de retard (17), aux deux entrées d'un élément de formation de différence (18), en ce que la sortie de l'élément de formation de différence (18) est reliée directement, par l'intermédiaire d'un élément de formation de montant (19) et par l'intermédiaire d'un inverseur (20), respectivement à un premier, deuxième et troisième discriminateurs (21, 22, 23), en ce que les sorties des premier et deuxième discriminateurs (21, 22) et des deuxième et troisième discriminateurs (22, 23) sont reliées, respectivement à une première et une deuxième portes ET (25, 26), en ce que les sorties des portes ET (25, 26) sont connectées chacune à une sortie d'affichage de sens de marche (30 ou 31), et en ce que les seuils ($S_1$, $S_2$, $S_3$) des discriminateurs (21, 22, 23) sont réglés chacun sur une valeur significativement supérieure à « zéro ».

**6.** Dispositif selon la revendication 5, caractérisé en ce que le temps de retard ($\tau$) de l'élément de retard (17) est typiquement d'environ 5 ms.

**7.** Dispositif selon la revendication 5 ou 6, caractérisé en ce qu'un calculateur de lissage est monté en amont de la sortie de l'élément de formation de différence (18) pour la formation d'une valeur moyenne.

**8.** Dispositif selon l'une des revendications 5 à 7, caractérisé en ce que les signaux de sortie de géophone sont envoyés chacun, en plus, par l'intermédiaire d'un élément d'élévation au carré respectif (32, 33), à un additionneur (34), en aval duquel est monté un extracteur de racine carré (35), en ce que la sortie de l'extracteur de racine carré (35) est connectée à un quatrième discriminateur (24) dont le seuil ($S_4$) est réglé significativement supérieur à « zéro », et en ce qu'entre chacune des sorties de l'affichage de sens de marche (30, 31) et les première et deuxième portes ET (25, 26) est insérée une porte ET supplémentaire (27 et 28) dont la deuxième entrée est connectée à la sortie du quatrième discriminateur (24).

**9.** Dispositif selon l'une des revendications 5 à 8, caractérisé en ce que la direction de réception du deuxième géophone (12) est orientée parallèlement au chemin (11).

**10.** Procédé selon la revendication 1, caractérisé en ce que pour la constatation de la partie d'onde de Rayleigh et la polarisation de celle-ci, le décalage de phase entre les signaux de sortie des géophones (12, 13) est déterminé, et en ce que lors d'un décalage de l'ordre de 90° l'un des sens de marche est indiqué et lors d'un décalage de l'ordre de 270° le sens de marche inverse est indiqué.

Fig. 1

Fig. 2

Fig. 3